Europäisches Patentamt

European Patent Office

Office européen des brevets

(11) Publication number : **0 520 812 A1**

# (12) EUROPEAN PATENT APPLICATION

(21) Application number : **92305895.2**

(22) Date of filing : **26.06.92**

(51) Int. Cl.⁵ : **B29B 7/60**

(30) Priority : **26.06.91 JP 180598/91**

(43) Date of publication of application :
**30.12.92 Bulletin 92/53**

(84) Designated Contracting States :
**DE ES FR GB IT**

(71) Applicant : **BRIDGESTONE CORPORATION**
**10-1 Kyobashi 1-Chome, Chuo-Ku**
**Tokyo 104 (JP)**

(72) Inventor : **Nishigai, Kazuhisa**
**13-12, Musashidai 6-chome**
**Hidaka-machi, Iruma-gun, Saitama Pref. (JP)**

(74) Representative : **Whalley, Kevin et al**
**MARKS & CLERK 57/60 Lincoln's Inn Fields**
**London WC2A 3LS (GB)**

(54) Method for quality assurance of batch kneaded mixtures.

(57) In producing a kneaded rubber sheet (9) as a tire constituent member, the weight of a kneaded mixture of one batch (4) discharged from a batch kneading mixer (1) is measured and only when the measured weight is within an allowable limit on the bases of the total weight of raw materials (2,3) charged in the mixer, the kneaded mixture is supplied into a hopper (7) of sheeting rollers (6) for the next process. Moreover, when the bank level of one kneaded mixture in the hopper becomes lower than a predetermined value, another kneaded mixture is supplied into the hopper to improve the reliability of sampling. Further, a kneaded mixture whose waiting time has exceeded a predetermined value is prevented from being supplied to the hopper. Weights of respective kneaded mixtures are accumulatively added to obtain a total weight at every lot different in composition for inventory controlling.

FIG.1

EP 0 520 812 A1

This invention relates to a method for assuring the quality of batch kneaded mixtures for producing a kneaded rubber sheet as a tire constituent member, and more particularly to a method for assuring the quality of batch kneaded mixtures more than a certain value by calculating various raw materials on the basis of a predetermined composition list and charging them into a batch processing apparatus such as a batch kneading mixer and for further assuring the quality of products produced by further processing the assured kneaded mixtures.

The term "batch kneaded mixture" used herein is intended to indicate a mass of mixture kneaded in a kneading mixer, while the term "lot" later used designates, for example, a sheet formed by a plurality of batch kneaded mixtures having the same compositions.

In producing kneaded rubber sheets as tire constituent members in the past, producing processes have been carried out without assuring (1) whether all the measured raw materials were surely charged into a batch kneading mixer, (2) whether all the kneaded mixtures were completely discharged from the mixer after kneading, and (3) whether the kneaded mixtures discharged from the mixer were supplied to a next process without any change of their physical properties. In general, therefore, specimens were sampled from all portions of products, for example, sheet-shaped products corresponding to the respective batch kneaded mixtures for inspecting their physical properties in order to supply to the next process only the kneaded mixtures having qualities more than predetermined levels.

In the conventional technique for producing a sheet made of successive batch kneaded mixtures, it is impossible to avoid irregularly mixing the successive batch kneaded mixtures. Therefore, even if one specimen is sampled from each portion of the sheet corresponding to one batch kneaded mixture in consideration of the length and weight of the sheet, it is not assured that the sampled specimens correctly correspond to the aimed batch kneaded mixtures, respectively. Consequently, it has been necessary to sample plural specimens from the portion corresponding to one batch kneaded mixture and to inspect the physical properties of all the specimens.

In the conventional technique, moreover, even if the assurance items (1), (2) and (3) described above are confirmed by the inspection of the numerous specimens, it is after the batch kneaded mixtures have been processed in a specified manner to form a sheet. Accordingly, the process for forming the sheet from the batch kneaded mixtures may become quite superfluous depending upon the results of the inspection of the specimens.

It is an object of the invention to provide a method for assuring the quality of batch kneaded mixtures, which eliminates all the disadvantages of the prior art and is able to confirm, before processing the batch kneaded mixtures, that all measured raw materials are surely charged into a batch kneaded mixer, that all the kneaded mixtures are completely discharged from the mixer without any remainder and that the kneaded mixtures exhausted from the mixer are supplied to a next process without changing their physical properties.

It is another object of the invention to provide a method for assuring the quality of batch kneaded mixtures, which greatly improves the reliability of sampling by effectively preventing any irregular mixing of the progressive batch kneaded mixtures in processing them so that only one sampling at the portion of a sheet corresponding to each batch kneaded mixture suffices to inspect the portion and hence only one sampling at one lot suffices to inspect the entire sheet in conjunction with accomplishment of the first object.

It is a further object of the invention to provide a method for assuring the quality of batch kneaded mixtures, which enables the batch kneaded mixtures to be used up without producing any excess in further kneading the mixtures in the next process.

In order to accomplish the first object, the method for assuring weights of batch kneaded mixtures for producing a kneaded rubber sheet as a tire constituent material according to the invention, comprises steps of measuring weight of every batch kneaded mixture discharged from a batch kneading mixer, and supplying the kneaded mixture into a hopper of sheeting rolls for the next process only when the measured weight is within a predetermined allowable range on the basis of the total weight of raw materials charged into the batch kneading mixer, while classifying the kneaded mixtures into reservation sections when the measured weights are out of the predetermined allowable range.

The method for assuring sampling of batch kneaded mixtures for producing a kneaded rubber sheet as a tire constituent material according to the invention, comprises a step of, after the bank level of a preceding batch kneaded mixture in the hopper of sheeting rolls has lowered to less than a predetermined value, supplying the next batch kneaded mixture into the hopper to effectively prevent batch kneaded mixtures from mixing with each other.

Moreover, the method for assuring physical properties of batch kneaded mixtures for producing a kneaded rubber sheet as a tire constituent material according to the invention, comprises steps of, in the case that there are plural batch kneaded mixtures waiting for being supplied into the hopper of sheeting rolls, classifying into a reservation section a batch kneaded mixture, if any, whose waiting time has exceeded a predetermined value among the waiting batch kneaded mixtures except the forwardmost one, and supplying the forwardmost batch kneaded mixture to the hopper.

Furthermore, the inventory controlling method for producing a kneaded rubber sheet as a tire constituent material according to the invention, comprises steps of recording weights of respective kneaded mixtures discharged from a batch kneading mixer and accumulatively adding the recorded weights to obtain a total weight at every lot different in composition, thereby enabling the batch kneaded mixtures to be used up without producing any excess in further kneading the mixtures in the next process.

Moreover, the method for assuring qualities of batch kneaded mixtures according to the invention comprises, in combination, the methods according to the invention described above.

According to the method of the invention for assuring weights of kneaded mixtures, if the weight of a kneaded mixture of one batch discharged from a batch kneading mixer is within a predetermined allowable range, it is assured that the batch kneaded mixture includes the respective raw materials compounded properly as expected and there is no residual rubber in the mixer, particularly at the pivot portion of an exit door of the mixer. Therefore, by supplying only such assured kneaded mixtures to the hopper of sheeting rolls, the quality of a sheet formed at the sheeting rolls can be assured without inspecting physical properties of every kneaded mixture.

On the other hand, if there are batch kneaded mixtures whose weights are out of the predetermined allowable range, they are classified as extraordinary mixtures into reservation sections. Such mixtures do not have the assurance of at least one of them described above. Therefore, after the qualities of the mixtures are wholly inspected, they are then used again.

The method for assuring sampling of kneaded mixtures according to the invention resides in the discovery that complicated mixing of progressive batch kneaded mixtures in a sheet formed by means of sheeting rolls can be effectively prevented if trailing kneaded mixtures are supplied into the hopper of sheeting rolls after the bank level of a preceding batch kneaded mixture in the hopper of sheeting rolls has lowered to less than a predetermined value. According to this method, only one specimen sampled at the portion of a sheet corresponding to each of the batch kneaded mixtures suffices to provide a proper pure sample to improve the sampling accuracy greatly.

Therefore, when the method for assuring sampling of kneaded mixtures is carried out in connection with the quality assurance above described, only one sampling at one position of a sheet can inspect whole the sheet of one lot.

According to the method of the invention for assuring physical properties of kneaded mixtures, kneaded mixtures whose waiting time has exceeded a predetermined value are classified as extraordinary mixtures into reservation sections to prevent production of a sheet made of the kneaded mixtures whose physical properties have changed due to exposure to high temperatures, for example, whose Mooney scorch time is less than a limit value, thereby making uniform the physical properties of the sheet throughout its length.

Furthermore, according to the inventory controlling method of the invention, weights of kneaded mixtures exhausted from a batch kneading mixer, particularly of kneaded mixtures supplied to the hopper of sheeting rolls are accumulatively added to obtain the total weight of the sheet of one lot formed at the sheeting rolls. Consequently, in further kneading the sheet in the next process, all the sheets classified by lots or all the kneaded mixtures classified by compositions can be divided depending upon the required number of kneading batches so that the batch kneaded mixtures can be completely used.

Moreover, according to the method of the invention for quality assurance comprising, in combination, the methods described above, the quality of the kneaded mixtures can be sufficiently assured by the methods for assuring weights and physical properties of kneaded mixtures before forming a sheet. Further, after forming the sheet, the qualities of the batch kneaded mixtures and hence the sheet itself can be exactly inspected with the aid of the improvement of reliability of sampling on the basis of the method for sampling assurance. Moreover, according to the inventory controlling method of the invention, batch mixtures once kneaded are used exhaustively to improve the yield of materials and at the same time to effectively prevent the change in physical property of the batch kneaded mixtures. The qualities of the batch kneaded mixtures and product therefrom can be always maintained at higher than certain levels in this manner.

The invention will be more fully understood by referring to the following detailed specification and claims taken in connection with the appended drawings.

Fig. 1 is a schematic view illustrating, by way of example, an apparatus for carrying out the method according to the invention; and

Fig. 2 is a graph illustrating the influence of the lapse of time on batch kneaded mixtures.

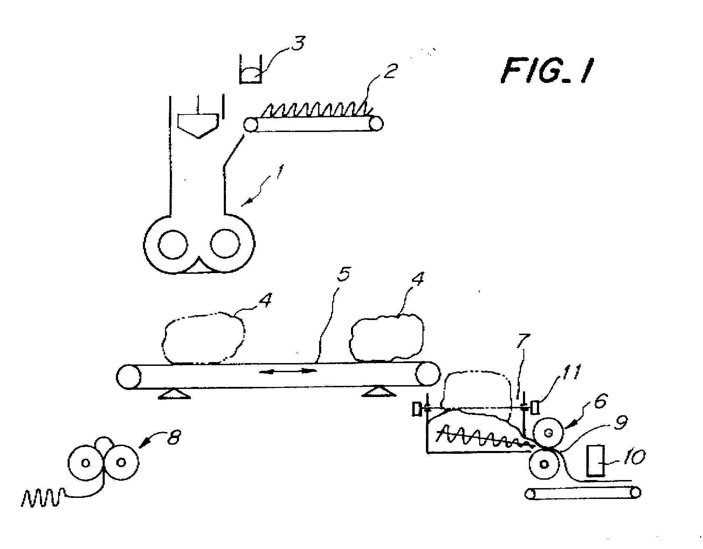

Fig. 1 schematically illustrates an apparatus for carrying out the method according to the invention. A banbury mixer 1 is used as a batch kneading mixer into which raw materials 2 and 3 are charged such as a roughly kneaded rubber, a vulcanizing agent and a vulcanization accelerator. These raw materials are kneaded in the banbury mixer 1 to form a batch kneaded mixture 4 which is then discharged onto transfer means having weight measurement means, for example, a scale conveyor 5 where the weight of the batch kneaded mixture 4 is measured. If the measured weight is within an allowable range of a predetermined value based on the total weight of the raw materials 2 and 3, the batch kneaded mixture 4 is transferred into the hopper 7 of sheeting rolls 6.

With total weights of raw materials of approximately 207 kgf kneaded in the banbury mixer 1, respective weights of the batch kneaded mixtures 4 were actually measured by means of the scale conveyor 5. As a result, it was ascertained that the measurement errors were within a range of +0.18% to -0.26%. Therefore, the sufficient accuracy can be obtained in the measurement of weight by means of the scale conveyor 5.

If the measured weight of a batch kneaded mixture 4 is out of the allowable range, it is transferred by the scale conveyor 5 in the direction opposite to the sheeting rolls 6. The transferred batch kneaded mixture 4 is classified into a reservation section. This mixture 4 in the reservation section is then formed into a sheet by means of other sheeting rolls 8 in this embodiment.

Once it is assured or certified that the weight of a batch kneaded mixture 4 to be supplied to the sheeting rolls 6 is within the tolerance or allowable limit, this assurance means that the batch kneaded mixture 4 properly includes various raw materials in the expected composition. Consequently, the quality of the sheet formed by the batch kneaded mixture 4 by means of the sheeting rolls 6 is also sufficiently assured after the sheet has been formed.

In contrast herewith, if a batch kneaded mixture 4 is classified into the reservation section by reason of shortage in weight, it is possible in connection with the shortage to inspect the operations of raw material supply apparatuses and existence of residual substances in the mixer, particularly at the pivot portions of the exit door of the mixer and the like.

In the shown embodiment, the batch kneaded mixture 4 supplied into the hopper 7 of the sheeting rolls 6 is formed into a sheet 9 by means of the sheeting rolls 6. The sheet 9 is then subjected to sampling by means of a sampling device 10 at timely moment.

In order to improve the reliability of the sampling to an extent that only one sampling per one batch kneaded mixture 4 is always sufficient to provide the expected results, the hopper 7 is provided with a level meter 11 which is a position detector such as a microwave sensor for detecting bank levels of the batch kneaded mixture shown in phantom lines in Fig. 1 which has been supplied prior to the batch kneaded mixture 4 shown in solid lines on the scale conveyor 5. After the level meter 11 has detected the bank level of the batch kneaded mixture 4 in the hopper 7 less than a predetermined level, in other words, after the batch kneaded mixture 4 has sufficiently settled in the hopper 7, the following batch kneaded mixture 4 on the scale conveyor 5 is supplied into the hopper 7. In this manner, it becomes possible to prevent irregular or uneven mixing in a sheet 9 formed by successive batch kneaded mixtures 4, particularly at jointed portions thereof.

If the successive batch kneaded mixtures 4 on the scale conveyor 5 are supplied into the hopper 7 without any restriction, the batch kneaded mixtures 4 different in property may be mixed here and there in the sheet. In contrast herewith, in the case that after the preceding batch kneaded mixture 4 has exhibited a bank level less than the predetermined level, the next batch kneaded mixture 4 is supplied into the hopper 7 as described above, the uneven mixture of the successive batch kneaded mixtures 4 at the joined portions in the sheet can be effectively prevented. As a result, only the specimen sampled from the sheet at a portion, for example, corresponding to the preceding batch kneaded mixture 4 is purely representative of the portion of the sheet formed by the preceding batch kneaded mixture 4 without representing the portion of the sheet formed by the next or trailing batch kneaded mixture 4.

Therefore, it becomes possible to inspect the physical properties of the batch kneaded mixtures 4 only by sampling one specimen from each portion of the sheet corresponding to one batch kneaded mixture 4. Moreover, if the compositions and thermal histories of the respective batch kneaded mixtures 4 are assured according to the invention and hence the sufficient homogeneity of the respective batch kneaded mixtures 4 is also assured, by sampling only one specimen from a sheet of one lot it is possible to inspect the physical properties of the respective batch kneaded mixtures 4 and further the physical properties of whole the sheet in one lot with high accuracy.

In successively supplying batch kneaded mixtures 4 into the hopper 7 described above, there is a batch kneaded mixture 4 waiting on the scale conveyor 5 for supplying into the hopper 7. In such a case, if the waiting time of the batch kneaded mixture 4 on the scale conveyor 5 exceeds a predetermined value determined by a vulcanized degree of the mixture, the batch kneaded mixture 4 is transferred by the scale conveyor 5 in the direction opposite to the sheeting rolls 6 to be classified into a reservation section, while the supply of the raw material to the mixer 1 is stopped.

Moreover, there are two batch kneaded mixtures 4 waiting on the scale conveyor 5 at the same time as shown in Fig. 1. In such a case, if the waiting time of the batch kneaded mixture 4 shown in a solid line on the scale conveyor 5 exceeds the predetermined value, the bath kneaded mixture 4 is transferred together with another batch kneaded mixture shown in a phantom line by the scale conveyor 5 in the direction opposite to the sheeting rolls 6 to be classified into a reservation section. In this manner, the batch kneaded mixture 4 whose Mooney scorch time has lowered to less than a limit value is prevented from being mixed into the sheet 9 to make uniform the sheet 9 throughout its length with respect to the physical properties, particularly properties associated with thermal history.

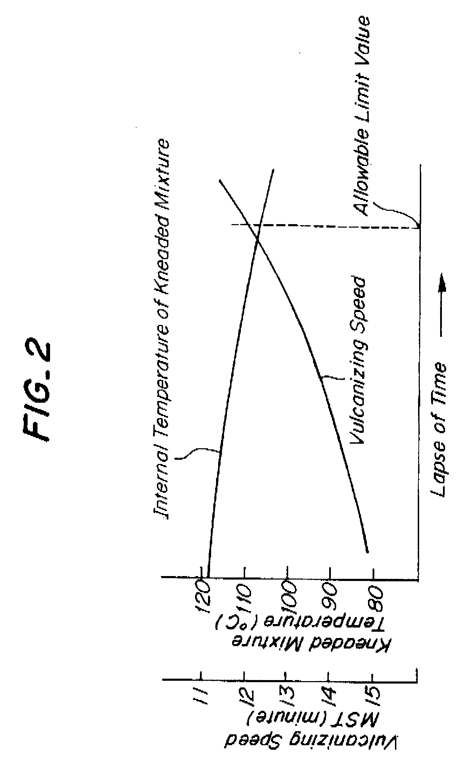

Fig. 2 is a graph exemplarily illustrating this fact on a batch kneaded mixture having a particular composition. As can be seen from this graph, the temperature and the Mooney scorch time of the batch kneaded mixture lower with the lapse of time. The longer the lapse of time, the shorter is the Mooney scorch time so that the quality of the kneaded mixture deviates from an expected value.

It is then required to record the measured weights of the respective batch kneaded mixtures 4 exhausted from the banbury mixer 1, particularly actually supplied to the hopper 7 of the sheeting rolls 6. In again kneading the sheet 9 thus formed in the next kneading process, these measured weights are accumulatively added to obtain a total weight of the sheet 9 at every lot different in composition. By dividing the respective sheets 9 into smaller sheets of numbers corresponding to batch numbers on the basis of the obtained total weights, for example, dividing uniformly, all the sheets can be used exhaustively so that any inventory control for residual or unused sheets is not needed.

According to the quality assuring method of the invention combined with the processes described above, various qualities of the batch kneaded mixtures 4 exhausted from the banbury mixer 1 and hence the sheets 9 made thereof can be sufficiently assured and the accuracy of sampling can be greatly improved. Moreover, by eliminating residual or unused sheets, any inventory control for unused sheets is not needed and the yield of materials can be improved. Further, sheets whose physical properties have changed out of predetermined ranges can be effectively prevented from being mixed into production lines.

As can be seen from the above description, according to the invention the quality of batch kneaded mixtures discharged from a batch kneading mixer can be assured and hence the quality of sheets and further products made from the batch kneaded mixtures can be also assured. Moreover, the reliability of sampling can be improved and any inventory control for unused sheets is not needed. It is clear that the invention exhibits numerous significant advantages in this manner which could not be accomplished in the prior art.

While the invention has been particularly shown and described with reference to preferred embodiments thereof, it will be understood by those skilled in the art that the foregoing and other changes in form and details can be made therein without departing from the scope of the invention.

## Claims

1. A method for assuring the weight of kneaded mixtures for producing a kneaded rubber sheet (9) as a tire constituent material, comprising measuring the weight of each batch kneaded mixture (4) discharged from a batch kneading mixer (1), and supplying the kneaded mixture into a hopper (7) of sheeting rolls (6) only when the measured weight is within a predetermined allowable range on the basis of the total weight of raw materials (2,3) charged into the batch kneading mixer (1) for assuring the weight of the kneaded mixtures, while classifying the kneaded mixtures into a reservation section when the measured weights are outside of the predetermined allowable range.

2. A method as claimed in claim 1, characterized in that the weight of the kneaded mixture (4) is measured by a scale conveyor (5) for supplying the kneaded mixtures to the hopper (7).

3. A method for assuring sampling of kneaded mixtures for producing a kneaded rubber sheet (9) as a tire constituent material, comprising, after the bank level of a preceding batch kneaded mixture (4) in a hopper (7) of sheeting rolls (6) has lowered to less than a predetermined value, supplying the next batch kneaded mixture into the hopper.

4. A method as claimed in claim 3, characterized in that the bank level Is measured by a microwave sensor (11).

5. A method for assuring physical properties of kneaded mixtures for producing a kneaded rubber sheet (9) as a tire constituent material, comprising, in the case that there are a plurality of batch kneaded mixtures (4) waiting to be supplied Into a hopper (7) of sheeting rolls (6) on a scale conveyor (5), transferring the batch kneaded mixtures in the direction opposite to the sheeting rolls (6) if the waiting time of the forwardmost batch kneaded mixture (4) has exceeded a predetermined value, and classifying the batch kneaded mixture into a reservation section.

6. A method as claimed in claim 5, characterized in that said predetermined value is determined by a vulcanized degree of the mixtures.

7. An inventory controlling method for producing a kneaded rubber sheet (9) as a tire constituent material, comprising recording weights of respective kneaded mixtures (4) discharged from a batch kneading mixer (1) and accumulatively adding the recorded weights to obtain a total weight of the batch kneaded mixtures used for producing the rubber sheet at every lot different in composition.

8. A method for assuring qualities of batch kneaded mixtures comprising, in combination, the methods as claimed in any two or more of claims 1, 3, 5 and 7.

9. A method for assuring weights of kneaded mixtures for producing the kneaded mixtures as a tire constituent material, comprising measuring the weight of each batch kneaded mixture (4) discharged from a batch kneading mixer (1), and supplying kneaded mixtures to the next process only when the measured weight is within a predetermined allowable range on the basis of the total weights of raw materials (2,3) charged into the batch kneading mixer, while classifying the kneaded mixture into a reservation section when the measured weight is outside of the predetermined allowable range.

FIG. 1

EP 0 520 812 A1

# FIG. 2

Internal Temperature of Kneaded Mixture

Vulcanizing Speed

Allowable Limit Value

Vulcanizing Speed MST (minute)

Kneaded Mixture Temperature (°C)

Lapse of Time →

**European Patent Office**

## EUROPEAN SEARCH REPORT

Application Number

EP 92 30 5895

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | PATENT ABSTRACTS OF JAPAN vol. 15, no. 190 (M-1113)16 May 1991 & JP-A-30 47 709 ( MATSUSHITA ELECTRIC WORKS LTD. ) * abstract * | 1-9 | B29B7/60 |
| A | PATENT ABSTRACTS OF JAPAN vol. 15, no. 053 (M-1079)7 February 1991 & JP-A-22 86 306 ( YOKOHAMA RUBBER CO LTD. ) * abstract * | 1-9 | |
| P,A | PATENT ABSTRACTS OF JAPAN vol. 16, no. 89 (M-1320)4 March 1992 & JP-A-32 72 422 ( MITSUBISHI HEAVY IND LTD. ) * abstract * | 1-9 | |
| A | PATENT ABSTRACTS OF JAPAN vol. 15, no. 53 (M-1079)7 February 1991 & JP-A-22 86 307 ( YOKOHAMA RUBBER CO LTD. ) * abstract * | 1-9 | TECHNICAL FIELDS SEARCHED (Int. Cl.5 )  B29B |

The present search report has been drawn up for all claims

| Place of search | Date of completion of the search | Examiner |
|---|---|---|
| THE HAGUE | 16 SEPTEMBER 1992 | JENSEN K.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)